# EUROPÄISCHE PATENTSCHRIFT

(11) **EP 1 847 418 B1**
(45) Veröffentlichungstag und Bekanntmachung des Hinweises auf die Patenterteilung: **09.12.2009**
(21) Anmeldenummer: 07007598.1
(22) Anmeldetag: 13.04.2007
(51) Int. Cl.: B60P 7/135

(54) **Ladegutsicherung an Transportfahrzeugen**
Method for securing loads on transport vehicles
Immobilisation pour marchandises sur des véhicules de transport

(30) Priorität: 13.04.2006 DE 202006006168 U
(43) Veröffentlichungstag der Anmeldung: 24.10.2007
(73) Patentinhaber: Hoelzer, Oliver, 42857 Remscheid (DE)
(72) Erfinder: Hoelzer, Oliver, 42857 Remscheid (DE)
(74) Vertreter: Füssel, Michael

(56) Entgegenhaltungen:
- EP-A- 1 415 854
- DE-A1- 10 303 058
- DE-U1-202004 020 070

## Beschreibung

Die Ladegutsicherung an Transportfahrzeugen dient dem zweck, das Ladegut gegen Verschiebungen zu sichern, insbesondere, wenn die Ladefläche mit einer Textil- oder Kunststofffolie abgedeckt ist und dem Ladegut keinen Halt bietet.

Ladegutsicherungen sind in den verschiedensten Ausführungen bekannt und sind für die Transportsicherheit von hoher Bedeutung.

Als Ladegutsicherung bekannter Bauweise kommen Rungen in Betracht, die entlang der Ladekante angeordnet sind und bei Fahrzeugen mit Abdeckplanen das Ladegut gegen Herausfallen sichern.

Ferner sind seitlich abklappbare Bordwände bekannt, die jedoch nur in einer geringen Höhe wirksam sind und darüber hinaus das Transportgut nicht sichern können.

Für Transportgüter die über die Bordwandhöhe reichen, wendet man Ketten, Seile und Gurte an.

Auch ist in der gattungsbildenden DE 20 2004 020 070.8 U1 eine verschiebbare Ladegutsicherung beschrieben, deren Seitenwandsegmente an der abklappbaren Bordwand arretiert werden und den Nachteil haben, bei Verriegelung der Seitenwandsegmente die Bordwand nicht mehr öffnen zu können.

Es ist Aufgabe der Erfindung, eine Ladegutsicherung zu schaffen, deren sicherungselemente stets an Bord verfügbar sind un die bausatzartig mit leichter Hand zu einer Ladegutsicherung für fast alle Transportgüter verwandelt werden können.

Diese Aufgabe wird durch die Merkmale des Anspruchs 1 gelöst. Die verschiebbaren Seitenwandsegmente sind in hängender Anordnung im oberen Dachrahmen mittels Rollwagen verschiebbar angebracht.

Am unteren Ende sind die verschiebbaren Seitenwandsegmente mit dem Außenrahmen über eine Verschlusseinheit verriegelbar, ohne dass die Verschlusseinheit in die Ladefläche ragt, oder die geschlossene Stützrunge eine verschiebung der Seitenwandsegmente behindert.

Die verschiebbaren Seitenwandsegmente können je nach Bedarf in ihren Abmessungen variieren.

Man kann je nach Ladegut die Seitenwandsegmente verschieben und so an der Ladekante positionieren, dass genau an den kritischen Stellen ein oder mehrere Seitenwandsegmente angeordnet werden, die das Ladegut gegen Verschiebungen nach außen sichern.

Als Material für die Seitenwandsegmente kann Kunststoff, Holz oder Metall verwendet werden.

Eine gewerbliche Anwendung dieser Erfindung ist sowohl an neuen Transportfahrzeugen als auch bei Nachrüstung älterer Transportfahrzeuge gesichert.

Die mit dieser Erfindung erzielbaren Vorteile bestehen darin, dass in dem so ausgerüsteten Transportfahrzeug alle Teile zur Sicherung der Ladung an Bord mitgeführt werden und ohne Kraftaufwand in Position gebracht werden können. Schweres Gurtmaterial zum Verzurren der Ladung wird kaum noch benötigt.

Der Zeitaufwand zur sicherung der Ladung ist geringer als bisher.

Nachfolgend soll mit Hilfe eines Ausführungsbeispiels die Erfindung näher erläutert werden.

Es zeigt:
- Fig.1: eine Ansicht des Sattelaufliegers in Seitenansicht.
- Fig.2: eine Seitenansicht des Sattelaufliegers mit verteilt angeordneten verschiebbaren Seitenwandsegmenten.
- Fig.3: eine weitere Seitenansicht des Sattelaufliegers mit zusammengeschobenen verschiebbaren Seitenwandsegmenten.
- Fig.4: eine Draufsicht auf die beispielhaft mit Papierrollen beladene Ladefläche zur Darstellung der zweckmäßigen Verteilung der verschiebbaren Seitenwandsegmente.
- Fig.5: ein verschiebbares Seitenwandsegment in Seitenansicht mit Anordnung der Rollwagen oben und der Verschlussheit unten, sowie dem Lochprofil des Aussenrahmens.
- Fig.6: Vorderansicht eines verschiebbaren Seitenwandsegmentes mit Rollwagen und Verschlusseinheit, die Verschlusseinheit ist im Aussenrahmen arretiert.
- Fig.7: Ein spezielles Ausführungbeispiel für das Profil eines Dachrahmens.

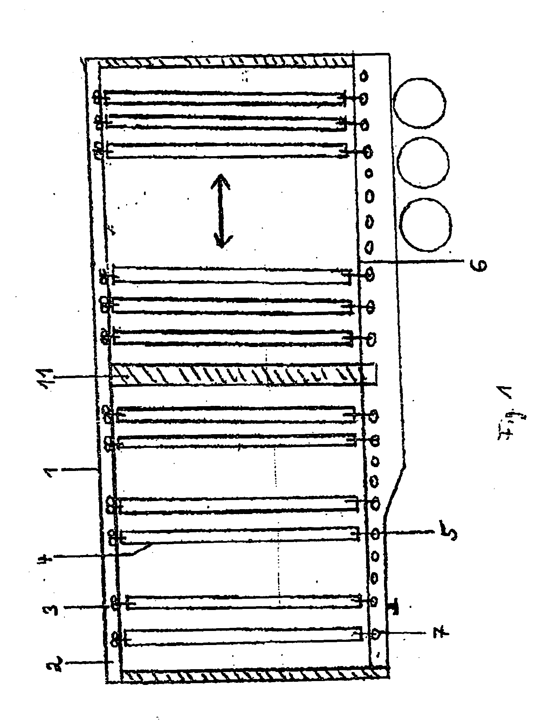

In Fig.1 ist der Sattelauflieger 1 in Seitenansicht dargestellt. Fig.1 zeigt die verschiebbaren Seitenwandsegmente 4, die in hängender Anordnung im Dachrahmen 2 mit den Rollwagen 3 eine Einheit bilden, sowie die Verschlusseinheiten 7, die im Aussenrahmen 5 arretiert werden können, ohne dass die Verschlusseinheiten 7 in die Ladefläche 6 ragen, oder die geschlossene Stützrunge 11 ein Verschieben der Seitenwandsegmente 4 behindern würde.

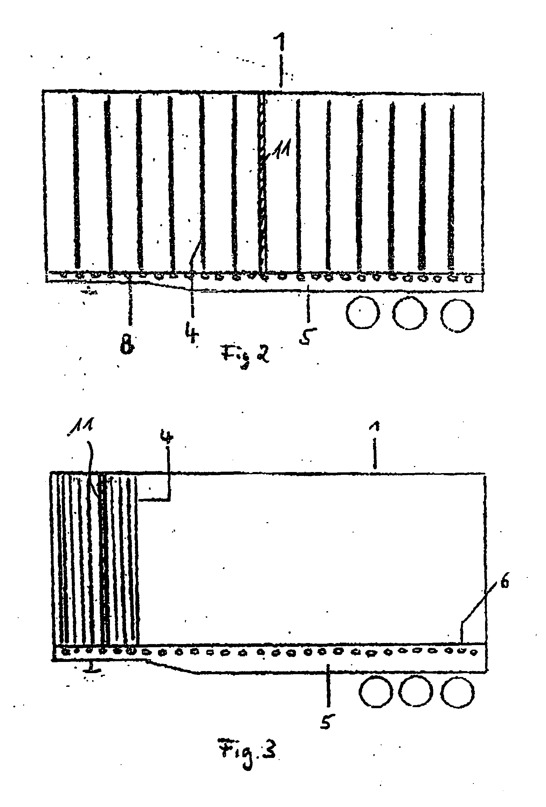

In Fig.2 ist der Sattelauflieger 1 in Seitenansicht mit verteilt auf die Fahrzeuglänge angeordneten verschiebbaren Seitewandsegmenten 4 dargestellt.

In Fig.3 ist der Sattelauflieger 1 in Seitenansicht mit zusammengeschobenen verschiebbaren Seitenwandsegmenten 4 dargestellt.

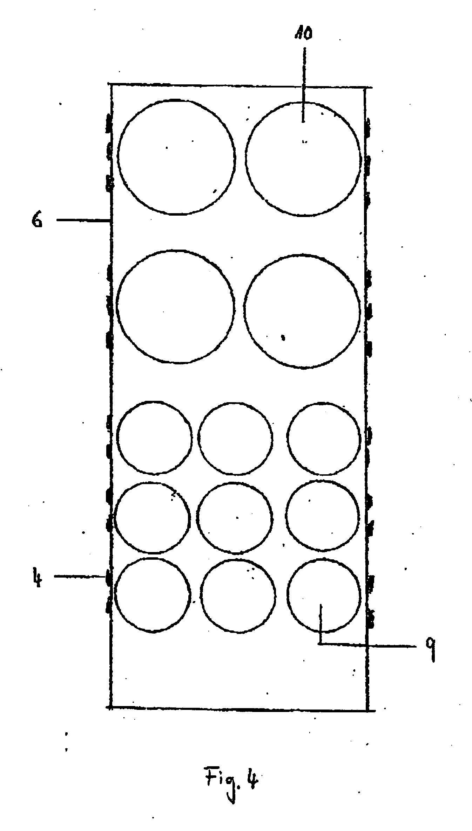

In Fig.4 ist der Sattelauflieger 1 in Draufsicht dargestellt und zeigt die Ladefläche 6 mit dem Ladegut in Form von Papierrollen 9 und 10.

Mit dieser Abbildung soll die Zuordnung der verschiebbaren Seitenwandsegmente 4 zur Absicherung des Ladegutes erklärt werden.

Man erkennt die sinnvolle verteilung der verschiebbaren Seitenwandsegmente 4 entsprechend des Ladegutes 9 und 10. Während die großen Papierrollen 10 mit drei Seitenwandsegmenten 4 gegen seitliches Verschieben gesichert werden, genügen bei den kleineren Papierrollen 9 zwei Seitenwandsegmente 4 zur Absicherung.

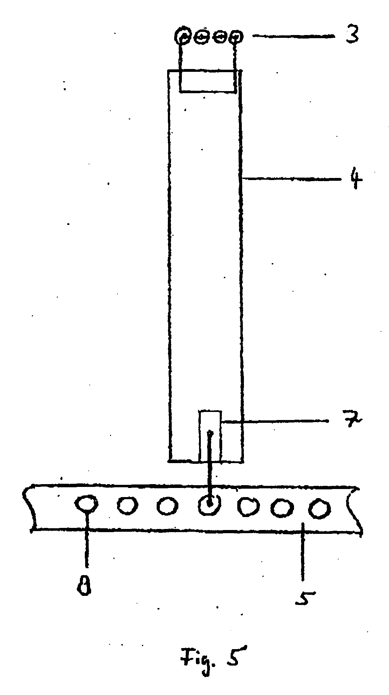

In Fig.5 ist ein Seitenwandsegment 4 in Seitenansicht mit dem oberen Rollwagen 3, der verschlusseinheit 7 und der Arretierung in den Löchern 8 im Aussenrahmen 5 dargestellt.

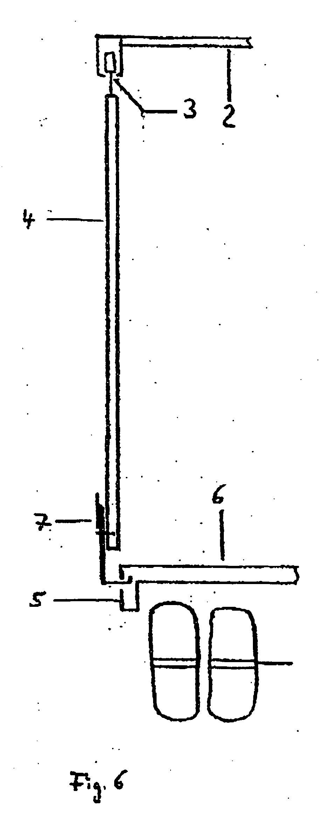

In Fig.6 6 in ein verschiebbares Seitenwandsegment 4 mit dem Rollwagen 3, der Verschlusseinheit 7 und dem Aussenrahmen 5 dargestellt.

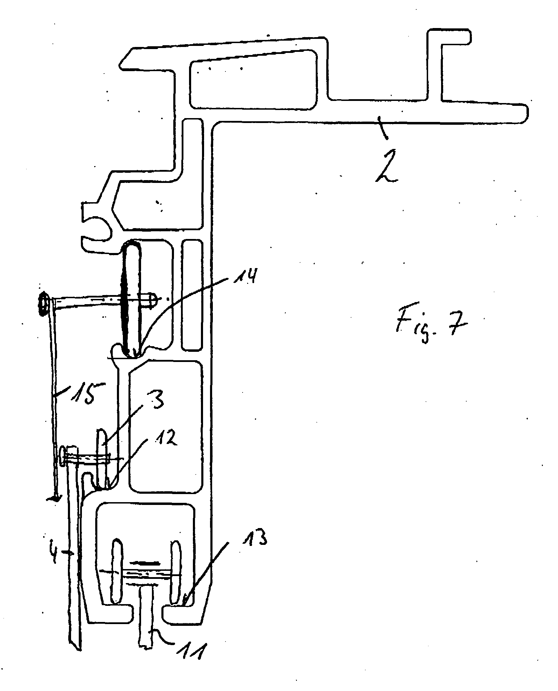

Ergänzend hierzu zeigt Fig.7 ein spezielles Ausführungsbeispiel für das Profil eines Dachrahmens 2.

Wesentlich ist die Anordnung mehrerer unabhängiger Schienen 12,13,14 an dem Profil.

Das Profil selbst ist einstückig als endlos gezogenes Profil ausgebildet.

Die Anordnung von drei unabhängigen Schienen 12,13,14 ist jedoch erfindungswesentlich, weil eine Verlagerung der Seitenbandsegmente 4 mit ihrem Rollwagen 3 ohne Behinderung durch geschlossene Stützrungen 11 nur so möglich ist, da sich die Seitenwandsegmente 4 und die Stützrungen 11 nicht wechselseitig im Weg sind.

Zu diesem zweck werden die Seitenwandsegmente 4 mit ihren Rollwagen 3 in eine separate und von den Stützrungen 11 unabhängige Schiene 12 des oberen Dachrahmens 2 eingehängt.

Die Seitenwandsegmente 4 können daher an den fest installierten Stützrungen 11 jederzeit vorbeigeschoben werden, so dass eine Beladung des Transportfahrzeugs an jeder Stelle einfach möglich ist.

Da im übrigen auch die Stützrungen 11 in separaten Schienen 13 am oberen Dachrahmen 2 gelagert sind, können auch die Stützrungen 11 an jede beliebige Stelle verschoben werden.

Auf diese Weise läßt sich das Transportfahrzeug auf seiner gesamten Länge bequem beladen.

Die Verlagerung der Seitenwandsegmente 4 ist völlig unabhängig von der Position der Stützrungen 11, wobei hier ergänzend auch noch eine dritte Schiene 14 am oberen Dachrahmen 2 vorgesehen ist, in welcher die Seitenplane 15 geführt werden kann.

Die Darstellung ist schematisch und soll nur verdeutlichen, dass die Seitenplane 15 sowohl die Seitenwandsegmente 4 als auch die Stützrungen 11 überdeckt, während die Seitenwandsegmente 4 nur die Stützrungen 11 überdecken.

Dabei kann jede beliebige Anordnung der Schienen 12,13,14 am oberen Dachrahmen 2 gewählt werden, so lange die Seitenwandsegmente 4 und die Stützrungen 11 unabhängig voneinander bewegbar sind.

Dies gilt sinngemäß auch für die unabhängige Bewegungsmöglichkeit der Seitenplane 15.

Im hier gezeigten Ausführungsbeispiel ist der Dachrahmen 2 aus einem einteiligen Strangpreßprofil hergestellt.

Es kann auch im Rahmen der Erfindung vorgesehen sein, die einzelnen Schienen 12,13,14 als separate Teile zu fertigen, die an einem entsprechenden Basiskörper angebracht werden, welcher die Funktion des oberen Dachrahmens übernimmt.

Dabei kann jede einzelne Schiene 12,13,14 für sich separat gefertigt sein oder zusammen mit anderen Schienen jeweils ein einheitliches werkstück bilden.

### Bezugszeichenliste

- 1: Sattelauflieger
- 2: Dachrahmen
- 3: Rollwagen
- 4: Verschiebbare Seitenwandsegmente
- 5: Aussenrahmen, unten
- 6: Ladefläche
- 7: Verschlusseinheit
- 8: Löcher im Aussenrahmen
- 9: Beispielhafte runde Ladung, klein
- 10: Beispielhafte runde Ladung, groß
- 11: Stützrunge
- 12: Schiene für 3
- 13: Schiene für 11
- 14: Schiene für 15
- 15: Seitenplane

## Patentansprüche

1. Ladegutsicherung an Transportfahrzeugen, bei welcher Stützrungen vorhanden sind, und am oberen Dachrahmen (2) mehrere Rollwagen (3) mit Seitenwandsegmenten (4) in hängender Anordnung angebracht und am unteren Ende der Seitenwandsegmente (4) Verschlusseinheiten (7) angeordnet sind, die jeweils in unterschiedlichen Längspositionen am unteren Aussenrahmen (8) des Fahrzeugs oder, falls vorhanden, an der Bordwand angreifen, um die Seitenwandsegmente (4) unverrückbar zu arretieren, **dadurch gekennzeichnet, dass** die Seitenwandsegmente (4) mit ihren Rollwagen (3) in einer von den Stützrungen (11) unabhängigen Schiene (12) des oberen Dachrahmens (2) verschiebbar sind.

2. Ladegutsicherung an Transportfahrzeugen nach Anspruch 1, **dadurch gekennzeichnet, dass** die Verschlusseinheiten von außen an dem Aussenrahmen angreifen ohne in die Ladefläche (6) zu ragen.

3. Ladegutsicherung an Transportfahrzeugen nach den Ansprüchen 1 oder 2, **dadurch gekennzeichnet, dass** die Verschlusseinheiten in Löcher (8) eines Lochrasters am unteren Aussenrahmen eingreifen.

4. Ladegutsicherung an Transportfahrzeugen nach einem der Ansprüche 1 bis 3, **dadurch gekennzeichnet, dass** die Stützrungen (11) ebenfalls in Längsrichtung verschiebbar am oberen Dachrahmen (2) gelagert sind.

5. Ladegutsicherung an Transportfahrzeugen nach Anspruch 4, **dadurch gekennzeichnet, dass** die Stützrungen (11) in einer separaten Schiene (13) am oberen Dachrahmen (2) gelagert sind.

6. Ladegutsicherung an Transportfahrzeugen nach einem der Ansprüche 1 bis 6, **dadurch gekennzeichnet, dass** am oberen Dachrahmen (2) eine dritte Schiene (14) zur Führung einer Seitenplane (15) vorgesehen ist.

7. Ladegutsicherung an Transportfahrzeugen nach Anspruch 1, **dadurch gekennzeichnet, dass** die Seitenwandsegmente (4) mit Löchern für zusätzliche Verankerungen mittels Seilen und Ketten versehen sind.

8. Ladegutsicherung an Transportfahrzeugen nach einem der Ansprüche 1 bis 7, **dadurch gekennzeichnet, dass** für die verschiebbaren Seitenwandsegmente (4) als Material Kunststoff, Holz oder Metall verwendet wird.

## Claims

1. Means for securing cargo on transport vehicles, which means are provided with support posts and attached to said means on the upper roof frame (2) are a plurality of dollies (3) with side wall segments (4) in a suspended arrangement and disposed on the lower end of the side wall segments (4) are locking units (7) which in each case in different longitudinal positions act upon the lower outer frame (8) of the vehicle or, if present, upon the platform gate, for the purpose of locking the side wall segments (4) in an unshiftable manner, **characterised in that** the side wall segments (4) can be displaced with their dollies (3) in a rail (12) of the upper roof frame (2), which rail is independent of the support posts (11).

2. Means for securing cargo on transport vehicles as claimed in claim 1, **characterised in that** the locking units act upon the outer frame from the outside without protruding into the loading surface (6).

3. Means for securing cargo on transport vehicles as claimed in claim 1 or 2, **characterised in that** the locking units engage into holes (8) of a perforated grating on the lower outer frame.

4. Means for securing cargo on transport vehicles as claimed in any one of claims 1 to 3, **characterised in that** the support posts (11) are likewise mounted so as to be displaceable in the longitudinal direction on the upper roof frame (2).

5. Means for securing cargo on transport vehicles as claimed in claim 4, **characterised in that** the support posts (11) are mounted in a separate rail (13) on the upper roof frame (2).

6. Means for securing cargo on transport vehicles as claimed in any one of claims 1 to 6 [sic], **characterised in that** a third rail (14) is provided on the upper roof frame (2) for guiding a side awning (15).

7. Means for securing cargo on transport vehicles as claimed in claim 1, **characterised in that** the side wall segments (4) are provided with holes for additional anchorings by means of cables and chains.

8. Means for securing cargo on transport vehicles as claimed in any one of claims 1 to 7, **characterised in that** synthetic material, wood or metal is used as the material for the displaceable side wall segments (4).

## Revendications

1. Système d'immobilisation de marchandises transportées sur des véhicules de transport, tel que des ranchers d'appui, comportant plusieurs chariots roulants (3) avec des segments de paroi latérale (4) sont installés suspendus sur un cadre de toit supérieur (2) et que des unités de blocage (7) sont agencées sur une extrémité inférieure de segments de paroi latérale (4), lesquelles unités de blocage s'accrochent, à chaque fois dans différentes positions longitudinales, à un châssis extérieur inférieur (8) du véhicule ou, si elle existe, à une ridelle, afin de bloquer les segments de paroi latérale (4) pour qu'ils ne bougent pas, **caractérisé en ce que** les segments de paroi latérale (4) avec leurs chariots roulants (3) peuvent être déplacés dans un rail (12), indépendant des ranchers d'appui (11), du cadre de toit supérieur (2).

2. Système d'immobilisation de marchandises transportées sur des véhicules de transport selon la revendication 1, **caractérisé en ce que** les unités de blocage s'accrochent de l'extérieur au châssis extérieur sans dépasser sur la plate-forme de chargement (6).

3. Système d'immobilisation de marchandises transportées sur des véhicules de transport selon les revendications 1 ou 2, **caractérisé en ce que** les unités de blocage s'accrochent dans des trous (8) d'un cadre à multiples trous sur le châssis extérieur inférieur.

4. Système d'immobilisation de marchandises transportées sur des véhicules de transport selon l'une des revendications 1 à 3, **caractérisé en ce que** les ranchers d'appui (11) sont également logés sur le cadre de toit supérieur (2) de manière à pouvoir être déplacés dans le sens de la longueur.

5. Système d'immobilisation de marchandises transportées sur des véhicules de transport selon la revendication 4, **caractérisé en ce que** les ranchers d'appui (11) sont logés dans un rail séparé (13) sur le cadre de toit supérieur (2).

6. Système d'immobilisation de marchandises transportées sur des véhicules de transport selon l'une des revendications 1 à 5, **caractérisé en ce qu'**un troisième rail (14) est prévu sur le cadre de toit supérieur (2) pour le guidage d'une bâche latérale (15).

7. Système d'immobilisation de marchandises transportées sur des véhicules de transport selon la revendication 1, **caractérisé en ce que** les segments de paroi latérale (4) sont munis de trous pour des ancrages supplémentaires au moyen de câbles et de chaînes.

8. Système d'immobilisation de marchandises transportées sur des véhicules de transport selon l'une des revendications 1 à 7, **caractérisé en ce que**, pour les segments de paroi latérale (4) pouvant être déplacés, on utilise comme matériau du plastique, du bois ou du métal.
